# EUROPEAN PATENT APPLICATION

(11) **EP 2 527 794 A2**
(43) Date of publication of application: **28.11.2012**
(21) Application number: 12168966.5
(22) Date of filing: 22.05.2012
(51) Int. Cl.: G01D 4/00

(54) **Display of utility data**

(30) Priority: 26.05.2011 US 201113116064
(71) Applicant: General Electric Company, Schenectady, NY 12345 (US)
(72) Inventor: Vadali, Manoj Kumar, 560066 Banagalore, Karnataka (IN); Kienitz, Paul Michael, Atlanta, GA Georgia 30339 (US); Rameshchandra, Supeda Prahladbhai, 500081 Andhra Pradesh (IN)
(74) Representative: Cleary, Fidelma

(57) **Abstract**

A system (102) for a display of utility data from an electronic utility meter (106) on a monitor is provided. The system includes a decoupling transformer (136) for decoupling a power line carrier (PLC) signal into a power signal and a communication signal; a filter (138) for removing an excess signal from the communication signal; and a computing device (104) for: generating the display of utility data, and sending a display of utility data signal to a monitor (108).

## Description

### BACKGROUND OF THE INVENTION

This invention relates generally to electronic utility meters and more particularly to a display of utility data from an electronic utility meter.

Electronic utility meters measure the use of various utilities, for example, electricity, water, sewage, and gas, by both residential and commercial customers. Electronic utility meters may include a display on the electronic utility meter that shows information about utility usage. Electronic utility meters may be located on an external portion of the customers' buildings or may be located in difficult to reach locations on an internal portion of the customers' buildings. To read or assess utility usage, the customer may have to go outside or to the difficult to reach internal location in order to read the meter display on the electronic utility meter.

At the same time, customers benefit from being able to read utility data in order to maximize their use of utilities. For example, peak usage times tend to be more costly for utility usage then off-peak usage times. If an activity does not need to be performed during the peak usage time, the activity could be deferred to the off-peak usage time thereby saving money and reducing demands on the utility distribution system.

### SUMMARY OF THE INVENTION

A first aspect of the invention includes a system for a display of utility data from an electronic utility meter on a monitor, the system comprising: a decoupling transformer for decoupling a power line carrier (PLC) signal into a power signal and a communication signal; a filter for removing an excess signal from the communication signal; and a computing device for: generating the display of utility data, and sending a display of utility data signal to the monitor.

A second aspect of the invention includes a method for a display of utility data from an electronic utility meter, the method comprising: decoupling, using a decoupling transformer, a power line carrier (PLC) signal into a power signal and a communication signal; removing, using a filter, an excess signal from the communication signal; generating, using the computing device, the display of utility data; and sending a display of utility data signal to a monitor.

A third aspect of the invention includes a computer program comprising program code means adapted to perform the above method when run on a computer and in the computer program embodied on a computer readable medium.

### BRIEF DESCRIPTION OF THE DRAWINGS

Embodiments of the present invention will now be described, by way of example only, with reference to the accompanying drawings in which:
FIG. 1 shows a block diagram of one embodiment of a display of utility data system in accordance with the invention.
FIG. 2 shows a flow diagram for use in describing a method according to an embodiment of the invention.
FIG. 3 shows a graphical view of one embodiment of a display of utility data in accordance with the invention.

It is noted that the drawings of the invention are not to scale. The drawings are intended to depict only typical aspects of the invention, and therefore should not be considered as limiting the scope of the invention. In the drawings, like numbering represents like elements between the drawings.

### DETAILED DESCRIPTION

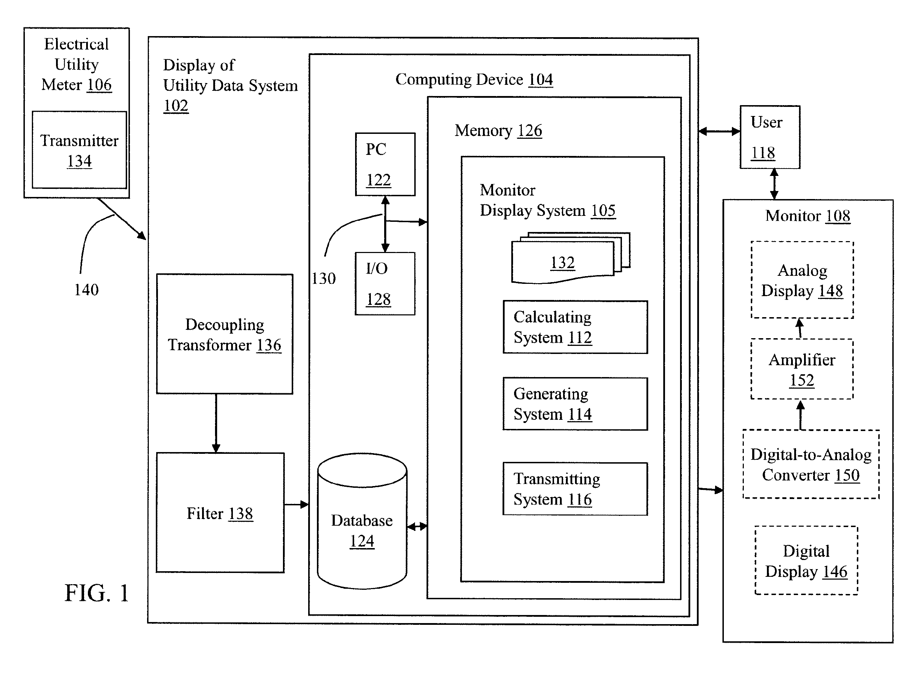

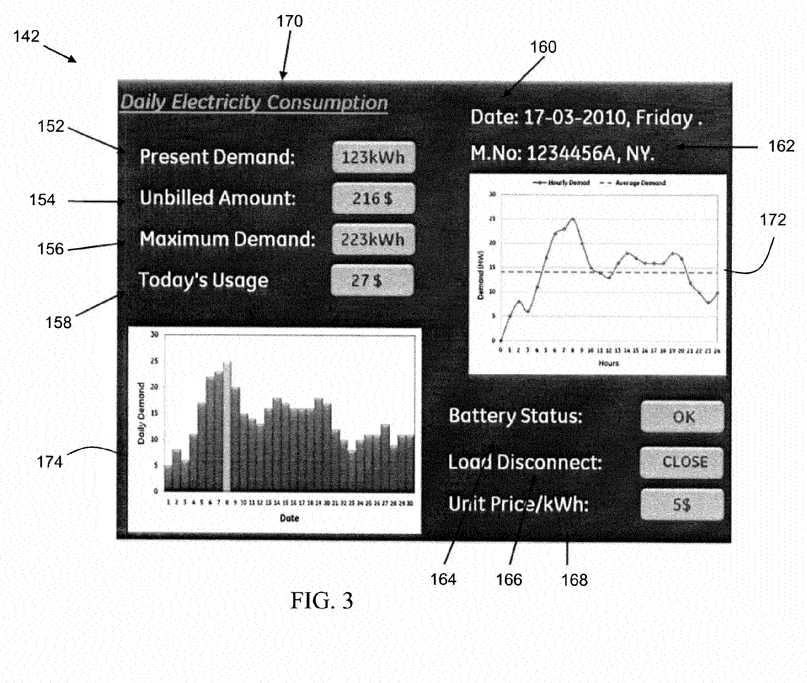

Referring to FIG. 1, a block diagram of one embodiment of a display of utility data system 102 in accordance with the invention is shown. Display of utility data system 102 may include a decoupling transformer 136, a filter 138, and a computing device 104. Computing device 104 may include monitor display system 105, which makes computing device 104 operable to receive utility data from an electrical utility meter 106, calculate the utility data, generate a utility display 142 (FIG. 3), and send a display of utility data signal for displaying utility display 142 (FIG. 3) on a monitor 108. As indicated in FIG. 1, a calculating system 112, a generating system 114, and a transmitting system 116 may be optional components (or, modules) in monitor display system 102. Alternatively, calculating system 112, generating system 114, and transmitting system 116 may be part of an external system which may perform the functions described herein.

Computing device 104 is shown in communication with user 118. User 118 may be a human, for example, a programmer or operator and/or a computerized system interacting with display of utility data system 102. Communications between user 118 and computing device 104 can be implemented using any solution, such as a graphical interface, an application programming interface (API), and/or the like. Furthermore, communications can utilize any combination of public and/or private networks. Computing device 104 is shown including a processing component 122 (e.g., one or more processors), a database 124, a memory 126, an input/output (I/O) component 128 (e.g., one or more I/O interfaces and/or devices), and a communications pathway 130. In one embodiment, processing component 122 executes program code, such as monitor display system 105, which is at least partially embodied in memory 126. While executing program code, processing component 122 can process data, which can result in reading and/or writing the data to/from database 124, memory 126 and/or I/O component 128 for further processing. Communications pathway 130 provides a communications link between each of the components in computing device 104. I/O component 128 can comprise one or more human I/O devices or storage devices, which enable user 118 to interact with computing device 104 and/or one or more communications devices to enable user 118 to communicate with computing device 104 using any type of communications link. To this extent, display of utility data system 102 can manage a set of interfaces (e.g., graphical user interface(s), application program interface, and/or the like) that enable human and/or system interaction with display of utility data system 102.

In any event, computing device 104 can comprise one or more general purpose computing articles of manufacture (e.g., computing devices) capable of executing program code installed thereon. As used herein, it is understood that "program code" means any collection of instructions, in any language, code or notation, that cause a computing device having an information processing capability to perform a particular function either directly or after any combination of the following: (a) conversion to another language, code or notation; (b) reproduction in a different material form; and/or (c) decompression. To this extent, monitor display system 105 can be embodied as any combination of system software and/or application software. In any event, the technical effect of computing device 104 is to receive utility data from electrical utility meter 106, calculate utility data, generate utility display 142 (FIG. 3), and send display of utility data signal for displaying utility display on monitor 108.

Further, monitor display system 105 can be implemented using a set of modules 132. In this case, a module 132 can enable computing device 104 to perform a set of tasks used by monitor display system 105, and can be separately developed and/or implemented apart from other portions of monitor display system 105. Monitor display system 105 may include modules 132 which comprise a specific use machine/hardware and/or software. Regardless, it is understood that two or more modules, and/or systems may share some/all of their respective hardware and/or software. Further, it is understood that some of the functionality discussed herein may not be implemented or additional functionality may be included as part of computing device 104.

When computing device 104 comprises multiple computing devices, each computing device may have only a portion of monitor display system 105 embodied thereon (e.g., one or more modules 132). However, it is understood that computing device 104 and monitor display system 105 are only representative of various possible equivalent computing devices that may perform a process described herein. To this extent, in other embodiments, the functionality provided by computing device 104 and monitor display system 105 can be at least partially implemented by one or more computing devices that include any combination of general and/or specific purpose hardware with or without program code. In each embodiment, the hardware and program code, if included, can be created using standard engineering and programming techniques, respectively.

Regardless, when computing device 104 includes multiple computing devices, the computing devices can communicate over any type of communications link. Further, while performing a process described herein, computing device 104 can communicate with one or more other computing devices using any type of communications link. In either case, the communications link can comprise any combination of various types of wired and/or wireless links; comprise any combination of one or more types of networks; and/or utilize any combination of various types of transmission techniques and protocols.

As discussed herein, monitor display system 105 enables computing device 104 to calculate utility data, generate utility display, and send a display of utility data signal for displaying utility display 142 (FIG. 3) on monitor 108. Monitor display system 105 may include logic, which may include the following functions: calculating system 112, generating system 114, and transmitting system 116. In one embodiment, monitor display system 105 may include logic to perform the below-stated functions. Structurally, the logic may take any of a variety of forms such as a field programmable gate array (FPGA), a microprocessor, a digital signal processor, an application specific integrated circuit (ASIC) or any other specific use machine structure capable of carrying out the functions described herein. Logic may take any of a variety of forms, such as software and/or hardware. However, for illustrative purposes, monitor display system 105 and logic included therein will be described herein as a specific use machine. As will be understood from the description, while logic is illustrated as including each of the above-stated functions, not all of the functions are necessary according to the teachings of the invention as recited in the appended claims.

In one embodiment, the invention provides a computer program embodied in at least one computer-readable storage medium, which when executed, enables a computing device (e.g., computing device 104) to calculate utility data, generate utility display, and send display of utility data for displaying utility display 142 (FIG. 3) on monitor 108. To this extent, the computer-readable storage medium includes program code, such as monitor display system 105, which implements some or all of a process described herein. It is understood that the term "computer-readable storage medium" comprises one or more of any type of tangible medium of expression capable of embodying a copy of the program code (e.g., a physical embodiment). For example, the computer-readable storage medium can comprise: one or more portable storage articles of manufacture; one or more memory/storage components of a computing device; paper; and/or the like. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

In another embodiment, the invention provides a method of providing a copy of program code, such as monitor display system 105, which implements some or all of a process described herein. In this case, a computing device can generate and transmit, for reception at a second, distinct location, a set of data signals that has one or more of its characteristics set and/or changed in such a manner as to encode a copy of the program code in the set of data signals. Similarly, an embodiment of the invention provides a method of acquiring a copy of program code that implements some or all of a process described herein, which includes a computing device receiving the set of data signals described herein, and translating the set of data signals into a copy of the computer program embodied in at least one computer-readable medium. In either case, the set of data signals can be transmitted/received using any type of communications link.

In still another embodiment, the invention provides a method of generating a system for calculating utility data, generating utility display, and sending display of utility data signal for displaying utility display 142 (FIG. 3) on monitor 108. In this case, a computing device, such as computing device 104, can be obtained (e.g., created, maintained, made available, etc.) and one or more modules for performing a process described herein can be obtained (e.g., created, purchased, used, modified, etc.) and deployed to the computing device. To this extent, the deployment can comprise one or more of: (1) installing program code on a computing device from a computer-readable medium; (2) adding one or more computing and/or I/O devices to the computing device; and (3) incorporating and/or modifying the computing device to enable it to perform a process described herein.

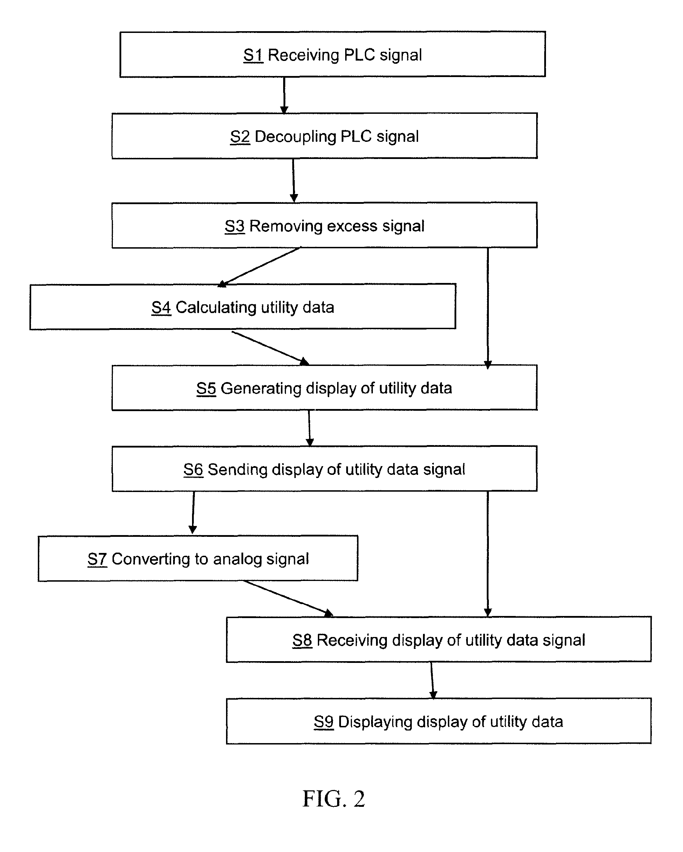

Referring to FIG. 2, a flow diagram of a method of displaying utility data from electrical utility meter in one embodiment of the invention is shown. Also, continuing to refer to FIG. 1, electrical utility meter 106 may include a transmitter 134 for sending a power line carrier (PLC) signal to decoupling transformer 136. The PLC signal may include a power signal and a communication signal. PLC signal may integrate a transmission of the communication signal and the power signal through the same cable 140. Power signal may include electrical power, and communication signal may include utility data. As shown in FIG. 2, at S1, decoupling transformer 136 receives the PLC signal and, at S2, decoupling transformer 136 decouples power signal from communication signal. At S3, a filter 138 may be provided for removing an excess signal, for example, a high frequency signal, e.g., "noise", from the communication signal. Decoupling transformer 136 may be operably connected with filter 138 and filter 138 may be operably connected to computing device 104.

Utility data may include meter data. Meter data may include any data read by, measured by, generated at, and/or communicated to the electronic utility meter. Meter data may include, for example, present demand, an unbilled amount, a maximum demand, a today's usage, a date, a time, a meter number, a battery status, a load disconnect state, a load disconnect status, and a unit price per kilowatt hour, and any other known or to be developed meter data. A person skilled in the art will readily recognize that a variety of meter data from electronic utility meter may be included in utility data.

Utility data may also include utility distribution network data. Utility distribution network data may include data measured and generated by any other nodes and/or components of the utility distribution network. Utility distribution network data may include information concerning the utility distribution network. Utility distribution network data may be communicated through the electronic utility meter 106. Utility distribution network may include, for example, substations, distribution stations, transformers, network nodes, generation stations, head end servers, utility personnel communicating with utility distribution network, and other known or to be developed components of the utility distribution network. Utility distribution network data may include, for example, a billing information, a price per kilowatt hour, a message (including text and/or pictorial content), a contact information, a help information, a power outage information, a weather information, a historical utility data, a power grid status, and any other known or to be developed utility distribution network data. A person skilled in the art will readily recognize that a variety of utility distribution network data from electronic utility meter may be included in utility data.

A person skilled in the art will readily recognize that the type of utility data included may vary with the type of utility being metered, for example, measurements of gas usage may differ from measurements of electricity usage.

In one embodiment, at S4, calculating system 112 may receive communication signal from filter 138 and calculate utility data in communication signal. Calculating utility data may include calculating new values from the utility data for additional information about utility usage, for example, present demand by price per kilowatt hour, maximum demand per day, and daily time of maximum demand. A person skilled in the art will readily recognize that a variety of new values calculated from the utility data may be possible.

At S5, generating system 114 may receive utility data from filter 138 and/or calculated utility data from calculating system 112 for generating a display of utility data 142 (FIG. 3). In one embodiment of the invention, display of utility data 142 (FIG. 3) may be viewed on monitor 108. At S6, generating system 114 may generate utility data for display on monitor 108 and may send display of utility data signal to monitor 108. Generating may be done by any now known or to be developed method of generating displays for monitors. Sending display of utility data signal to monitor 108 may be done by any now known or to be developed method, for example, via a cable or radio transmission.

As shown in FIG. 1, monitor 108 may include a digital display 146 or an analog display 148. Monitor 108 may include, for example, televisions, lap top computers, desk top computers, wall panel displays, and video monitors. Monitor 108 may be located in both residential and commercial customer buildings, for example, homes and businesses. In any event, one embodiment may include a digital-to-analog converter (DAC) 150. At S7, DAC 150 may receive display of utility data signal in a digital format and may convert the display of utility data signal to analog format before utility display signal is transmitted to analog display 148. In one embodiment, an amplifier 151 may be included to enhance the analog signal before transmitting to analog display 148. At S9, monitor 108 may receive and display display of utility data 142 (FIG. 3).

Referring to FIG. 3, a graphic representation of one embodiment of display of utility data 142 according to the invention is shown. Display of utility data 142 may include, for example, a present demand display 152, an unbilled amount display 154, a maximum demand display 156, a today's usage display 158, a date display 160, a meter number display 162, a battery status display 164, a load disconnect display 166, and a unit price per kilowatt hour display 168. Further, display of utility data 142 may include a title display 170 along with graphic images, for example, a demand per hour graph display 172 and/or a demand per date graph 174. A person skilled in the art will recognize that other types of utility data could be displayed and that the placement of the visual images such as graphs within the display may vary. A bar graph and line graph are illustrated in FIG. 3 but any type of graphic images to display utility data relationships could be utilized.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system (102) for a display of utility data from an electronic utility meter (106) on a monitor (108), the system (102) comprising:
a decoupling transformer (136) for decoupling a power line carrier (PLC) signal into a power signal and a communication signal;
a filter (138) for removing an excess signal from the communication signal; and
a computing device (104) for:
generating the display of utility data, and
sending a display of utility data signal to the monitor (108).

2. The system (102) of claim 1, wherein the display of utility data includes at least one of a present demand (152), an unbilled amount (154), a maximum demand (156), a today's usage (158), a date (160), a time, a meter number (162), a battery status (164), a load disconnect (166), a unit price per kilowatt hour (168), a billing information, a message, a contact information, a help information, a power outage information, a weather information, a historical utility data, and a power grid status.

3. The system (102) of claim 1 or 2, the computing device (104) further providing for:
calculating new values from the utility data in the communication signal.

4. The system (102) of any of claims 1 to 3, wherein the display of utility data includes a demand per hour graph (172) and a demand per date graph (174).

5. The system (102) of any of claims 1 to 4, further comprising a digital-to-analog converter (150) for converting the display of utility data signal from a digital signal to an analog signal.

6. The system (102) of claim 5, wherein the monitor is an analog monitor (108) operably coupled to the computing device (104) for:
receiving the display of utility data signal; and
displaying the display of utility data.

7. The system (102) of any of claims 1 to 4, wherein the monitor (108) is a digital monitor (108) operably coupled to the computing device (104) for:
receiving the display of utility data signal; and
displaying the display of utility data.

8. The system (102) of any preceding claim, further comprising a transmitter (134) for sending the PLC signal from the electronic utility meter (106) to the decoupling transformer (136).

9. A method for a display of utility data from an electronic utility meter (106), the method comprising:
decoupling, using a decoupling transformer (136), a power line carrier (PLC) signal into a power signal and a communication signal;
removing, using a filter (138), an excess signal from the communication signal;
generating, using a computing device (104), the display of utility data; and
sending a display of utility data signal to a monitor (108).

10. The method of claim 9, wherein the display of utility data includes at least one of one of a present demand (152), an unbilled amount (154), a maximum demand (156), a today's usage (158), a date (160), a time, a meter number (162), a battery status (164), a load disconnect (166), a unit price per kilowatt hour (168), a billing information, a message, a contact information, a help information, a power outage information, a weather information, a historical utility data, and a power grid status.

11. The method of claim 9 or 10, further comprising:
calculating new values from the utility data in the communication signal.

12. The method of any of claims 9 to 11, wherein the display of utility data includes a demand per hour graph (172) and a demand per date graph (174).

13. The method of any of claims 9 to 12, further comprising converting, using a digital-to-analog converter (150), the display of utility data signal from a digital signal to an analog signal.

14. A computer program comprising computer program code means adapted to perform the steps of the method of any of claims 9 to 13, when run on a computer.

15. The computer program of claim 14, embodied on a computer program medium.
